# EUROPEAN PATENT APPLICATION

(11) **EP 4 477 342 A1**
(43) Date of publication of application: **18.12.2024**
(21) Application number: 22928777.6
(22) Date of filing: 28.02.2022
(51) Int. Cl.: B23K 9/04, B23K 9/235

(54) **ADDITIVE MANUFACTURING METHOD, ADDITIVE MANUFACTURING SYSTEM, AND ADDITIVE MANUFACTURING PROGRAM**

(71) Applicant: Yamazaki Mazak Corporation, Niwa-gun, Aichi 480-0197 (JP)
(72) Inventor: OUCHI Seigo, Niwa-gun, Aichi 480-0197 (JP); SUZUKI Atsushi, Niwa-gun, Aichi 480-0197 (JP); ISHIBASHI Kazuhiro, Niwa-gun, Aichi 480-0197 (JP)
(74) Representative: TBK
(86) International application number: PCT/JP2022/008377
(87) International publication number: WO 2023/162253

(57) **Abstract**

The present invention relates to an additive manufacturing method and an additive manufacturing system, with which a processing system configuration does not become complicated and processing time is reducible. The method of the present invention includes a preheating step of heating so that a temperature of an additive manufacturing region in a workpiece can reach a preheating lower limit temperature or above by cutting a cutting region in the workpiece including the additive manufacturing region, and an additive manufacturing step of adding melted metal to the additive manufacturing region in the workpiece preheated by the preheating step. The system includes an additive manufacturing section to add melted metal to a workpiece, a cutting process section to subject a surface of the workpiece to a cutting process, and a control section to transmit a control signal that controls an operation of each of these sections. The control section causes the cutting process section to cut a cutting region including an additive manufacturing region in the workpiece so as to raise a temperature of the additive manufacturing region to a preheating lower limit temperature or above, and causes the additive manufacturing section to add the melted metal to the additive manufacturing region in the workpiece in a preheated state.

## Description

### Technical Field

The present invention relates to an additive manufacturing method, an additive manufacturing system, and an additive manufacturing program.

### Background Art

In an additive manufacturing that forms a metal object by adding a metal material to a mother material while melting the metal material, if a surface of the mother material has a low temperature, melted metal added to the mother material is cooled rapidly, and a heat-affected zone is susceptible to curing and embrittlement. Therefore, for the purpose of preventing the curing and embrittlement of the heat-affected zone by decreasing a cooling rate of the melted metal, preheating is carried out so that the surface of the mother material can have a certain temperature or above.

For example, Patent Literature 1 discloses as follows. In a construction process of repairing a tip end of a gas turbine rotor blade by build-up welding, the tip end is subjected to surface finishing by cutting or grinding before a welding procedure. After heating, the build-up welding is carried out using, for example, a bar-shaped filler metal. The preheating is carried out by bringing a high frequency heating mechanism or a heating mechanism made up of an ark lamp, etc. into contact with an outside in the vicinity of the tip end of the rotor blade.

### Citation List

### Patent Literature

PTL1: JP 10-80767 A

### Summary of Invention

### Technical Problem

In the case of manually providing heating devices, such as a heater and a gas burner, used for the preheating, it is necessary to transport a workpiece between the step of preheating and the step of additive manufacturing, resulting in longer processing time. There has also been the problem that a system configuration may be complicated because the heating devices are incorporated into a system.

It is an object of the present invention to provide an additive manufacturing method, an additive manufacturing system, and an additive manufacturing program, with which a system configuration does not become complicated and processing time is reducible in an additive manufacturing.

### Solution to Problem

An additive manufacturing method of the present invention includes a preheating step of heating so that a temperature of an additive manufacturing region in a workpiece can reach a preheating lower limit temperature or above by cutting a cutting region in the workpiece including the additive manufacturing region, and an additive manufacturing step of adding melted metal to the additive manufacturing region in the workpiece preheated in the preheating step.

Moreover, the additive manufacturing method may include:
(1) further cutting the cutting region if the temperature of the cutting region after being cut is low,
(2) determining a start position for addition of the melted metal on the basis of a shape of the workpiece after being cut,
(3) carrying out the cutting without supplying a coolant to the workpiece,
(4) using a ceramics tool or CBN tool as a cutting tool in the cutting,
(5) holding the workpiece by a claw-shaped jig, and maintaining a holding state in the preheating step and the additive manufacturing step, and
(6) laminating a bead by moving while melting a metal wire by arc discharge in the additive manufacturing.

An additive manufacturing system in the present invention includes: an additive manufacturing section to add melted metal to a workpiece; a cutting process section to subject a surface of the workpiece to a cutting process; and a control section to transmit a control signal that controls an operation to each of these sections. The control section causes the cutting process section to cut a cutting region including an additive manufacturing region in the workpiece so as to raise a temperature of the additive manufacturing region to a preheating lower limit temperature or above. The control section causes the additive manufacturing section to add the melted metal to the additive manufacturing region in the workpiece in a preheated state.

Moreover, the additive manufacturing system may be configured as follows:
(1) The control section causes further cutting of the cutting region so as to heat the additive manufacturing region if the temperature of the additive manufacturing region after being cut is low,
(2) The control section determines a start position for addition of the melted on the basis of a shape of the workpiece after being cut,
(3) The control section causes cutting of the cutting region without supplying a coolant,
(4) The control section causes cutting of the cutting region by using a ceramic tool or CBN tool as a cutting tool,
(5) The system further includes a claw-shaped jig to hold the workpiece, and
(6) The additive manufacturing section laminates a bead while moving and melting a metal wire by arc discharge.

An additive manufacturing program of the present invention includes a preheating routine where a cutting process section cuts a cutting region including an additive manufacturing region in a workpiece so as to raise a temperature of the additive manufacturing region to a preheating lower limit temperature or above, and an additive manufacturing routine where an additive manufacturing section adds melted metal to the additive manufacturing region in the workpiece in a preheated state.

The program may include the following:
(1) Causing further cutting and heating the cutting region if a temperature of the additive manufacturing region is low on the basis of a measuring result of the temperature of the additive manufacturing region after being cut,
(2) Determining a start position for addition of melted metal to the workpieces on the basis of a shape of the workpiece after being cut,
(3) Causing the cutting process section to cut without supplying a coolant in the preheating routine,
(4) Causing cutting by using a ceramic tool or CBN tool as a cutting tool in the preheating routine, and
(5) Causing lamination of a bead while moving and melting a metal wire by arc discharge in the additive manufacturing routine.

With the above invention, the configuration of the processing system does not become complicated, and processing time is reducible because preheating is possible without using a heating device, and there is no need for, for example, the step of moving the heating device.

### Brief Description of Drawings

[FIG. 1] FIG. 1 is a perspective view of an additive manufacturing system in an embodiment of the present invention.
[FIG. 2] FIG. 2 is a perspective view of main parts of the additive manufacturing system in the embodiment of the present invention.
[FIG. 3] FIG. 3 is a cross-sectional perspective view (a part of which is a block diagram) of the additive manufacturing system in the embodiment of the present invention.
[FIG. 4] FIG. 4 is a block diagram of a control section included in the additive manufacturing system.
[FIG. 5A] FIG. 5A is a side view illustrating a part of an additive manufacturing method.
[FIG. 5B] FIG. 5B is a side view illustrating a part of the additive manufacturing method.
[FIG. 6] FIG. 6 is a flowchart illustrating an additive manufacturing method in an embodiment of the present invention.
[FIG. 7] FIG. 7 is a flowchart illustrating an additive manufacturing method in other embodiment of the present invention.
[FIG. 8] FIG. 8 is a side view of main parts of a workpiece illustrating a shape after being cut and a position of an additive manufacturing.
[FIG. 9A] FIG. 9A is a side view illustrating a method of a preheating test.
[FIG. 9B] FIG. 9B is a top view of a workpiece illustrating a cutting path in the preheating test.
[FIG. 10] FIG. 10 is a graph illustrating results of the preheating test.

### Description of Embodiments

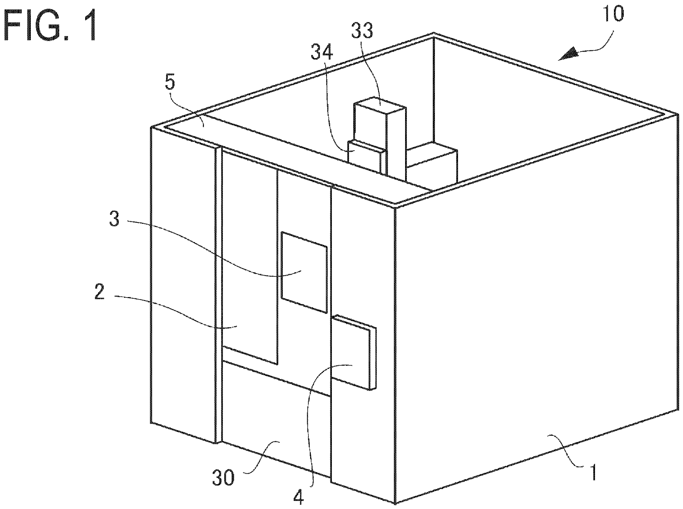

An additive manufacturing method, an additive manufacturing system, and an additive manufacturing program according to the present invention are described in detail below with reference to FIGs. 1 to 8.

The additive manufacturing system will be described first.

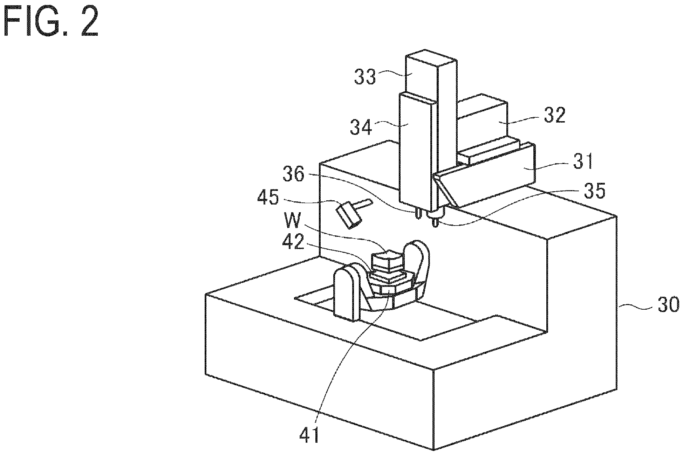

As illustrated in FIGs. 1 and 2, a processing system 10 usable as the additive manufacturing system includes a cutting process section 33 for cutting a workpiece W, and an additive manufacturing section 34 for adding melted metal to the workpiece W. In this embodiment, the additive manufacturing section 34 is capable of forming a bead while moving and melting a metal wire by arc discharge, and carries out an additive manufacturing by forming and laminating the bead.

The processing system 10 includes a cover 1 that covers four sides. A door 2, a window 3, and a control panel 4 are provided on a front (near side) of the cover 1. The door 2 is slidable laterally and openable and closable, so that an operator or an automatic attachment/detachment device can attach and detach the workpiece W from the outside of the cover 1. The window 3 is provided in order to observe the workpiece W during processing from the outside. In cases where strong light, such as arc discharge, is emitted in the additive manufacturing, the window 3 is preferably replaceable with a filter capable of shading the light of the arc discharge to the extent that the light can be seen with the unaided eye from the outside. For example, a replacement can be carried out by changing an amount of light passing through by a liquid crystal panel. The control panel 4 is provided in order that the operator can operate the processing system 10. The control panel 4 is provided to make it possible for the operator to operate the processing system 10, and includes, for example, an input device to input a manufacturing processing program and other operation instructions, and a display device to check input contents and operations.

The processing system 10 includes a base 30, which is a foundation of the processing system 10, on an inner side of the cover 1. The processing system 10 includes a saddle 31 supported so as to be movable in a left-right direction as viewed from a side of the door 2 with respect to the base 30, a column 32 supported so as to be movable in a front-back direction with respect to the saddle 31, and a cutting process section 33 supported so as to be movable in an up-and-down direction with respect to the column 32. An additive manufacturing section 34 is provided in the cutting process section 33 and is configured to be movable together with the cutting process section 33.

The cutting process section 33 includes a cutting tool 35. Particularly, the cutting process section 33 includes a mechanism that holds and rotates the cutting tool 35, and is capable of machining the workpiece W by a cutting process, such as milling, carried out while rotating the cutting tool 35. The additive manufacturing section 34 includes a torch 36, and is capable of carrying out an additive manufacturing onto the workpiece W. The cutting process section 33 and the additive manufacturing section 34 are provided so as to avoid interference between their respective devices. Specifically, the cutting tool 35 and the torch 36 are separated from each other by a predetermined distance, and if either one of the two is brought into contact with the workpiece W, the other is concurrently kept away from the workpiece W. The cutting process section 33 preferably includes a mechanism for automatic exchange of the cutting tool 35. For example, when performing arc discharge, the cutting tool 35 is preferably removable to keep away therefrom. The additive manufacturing section 34 preferably includes a mechanism for accommodating the torch 36 therein. For example, the torch 36 is preferably retractable to the inside of the additive manufacturing section 34. The additive manufacturing section 34 may also be provided so as to be vertically movable with respect to the cutting process section 33.

The processing system 10 includes a holding block 41 for holding the workpiece W, and a jig 42 for securing the workpiece W to the holding block 41, both of which are provided below the cutting process section 33 and the additive manufacturing section 34 so as to be supported on the base 30. Additionally, the holding block 41 may be configured to be supported rotatably around an axis extending in a front-back direction in a horizontal plane, and also may be configured to rotate the workpiece W around an axis extending in a direction orthogonal to the foregoing axis. That is, the workpiece W may be held by the holding block 41 so as to be biaxially rotatable. This enables a cutting process, such as a turning process carried out while rotating the workpiece W.

The processing system 10 also includes a temperature measuring device 45 capable of measuring a temperature of a surface of the workpiece W. As the temperature measuring device 45, one which is capable of optically measuring the temperature in a non-contact manner, such as an infrared radiation thermometer, is suitably usable.

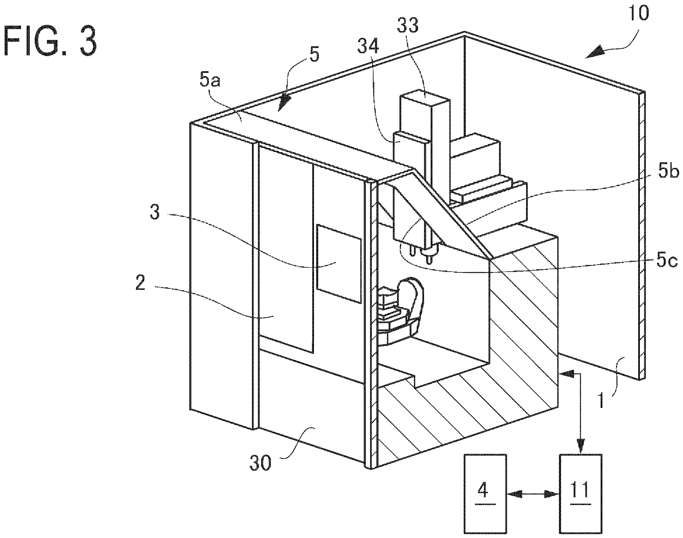

As illustrated in FIG. 3, the processing system 10 further includes a top cover 5. The top cover 5 includes a front part 5a extending horizontally backwards from an upper end on a near side of the cover 1, and an inclined part 5b that is provided behind the front part 5a and extends downward and backward. The inclined part 5b includes a hole part 5c through which a lower part of each of the cutting process section 33 and the additive manufacturing section 34 is inserted from top and rear. That is, the top cover 5 covers from above surroundings of the cutting tool 35 and the torch 36 provided below the cutting process section 33 and the additive manufacturing section 34.

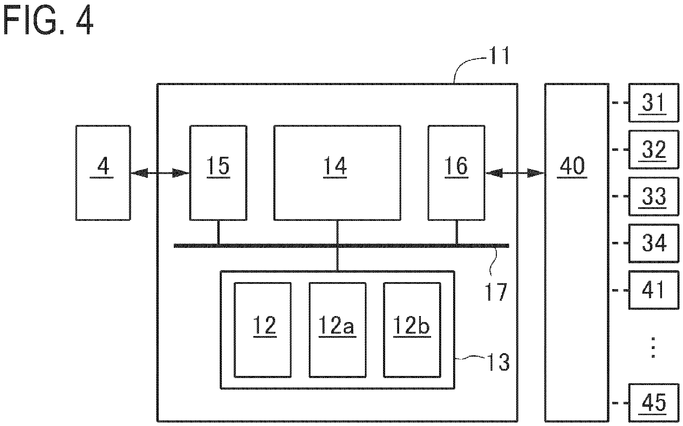

A driving mechanism 40 (refer to FIG. 4), which generates and transmits power for operating the saddle 31, the column 32, the cutting process section 33, the additive manufacturing section 34, and the holding block 41, is provided within and behind the base 30. The driving mechanism includes a power unit, such as a servomotor, and a power transmission mechanism, such as a ball screw and a gear.

The processing system 10 includes a control section 11 that controls overall operations of the processing system 10 including the saddle 31, the column 32, the cutting process section 33, the additive manufacturing section 34, the holding block 41, and the temperature measuring device 45 by sending control signals for giving operational instructions to the driving mechanism, etc. The control section 11 is further connected to the control panel 4, and is capable of accepting an input from the control panel 4 so as to be reflected on the operations of the processing system 10.

Specifically, as illustrated in FIG. 4, the control section 11 includes a processor 14 made up of electronic circuits, such as a central processing unit (CPU), and a memory 13 that is a recording medium. The memory 13 stores therein a processing program 12 that is a computer program. The memory 13 also stores therein other program 12a for controlling the operations of the processing system 10, and control data 12b including various kinds of parameters and given values related to the driving mechanism 40 used for the operation control of the driving mechanism 40.

The control section 11 includes a first input-output interface 15 that mediates information exchange with the control panel 4 by conversion of electrical signal, and a second input-output interface 16 that mediates information exchange with a driver, etc. of a power unit of the foregoing driving mechanism 40 in the same manner. These interfaces are mutually connected to the processor 14 including the memory 13 through a path 17 that is a communication path of electrical signals.

That is, the first input-output interface 15 is capable of accepting an input from an input device of the control panel 4, and then transmitting the input to the processor 14, and is capable of outputting a signal from the processor 14 to the control panel 4. The control panel 4 is capable of causing a display device, etc. to display information based on a signal outputted from the first input-output interface 15.

The second input-output interface 16 is connected to the driving mechanism 40, and is capable of accepting from the processor 14 a control signal including an instruction for operating the driving mechanism 40, and then transmitting the control signal to a driver, etc. of the power unit in the driving mechanism. In order to perform feedback control, such as PID control, on the driving mechanism, the second input-output interface 16 is also capable of accepting signals from a sensor, etc. that senses an operation of the driving mechanism, and is then capable of transmitting the signal to the processor 14.

The driving mechanism 40 is mechanically connected to other mechanical devices that are configured to perform an operation by being respectively included in the saddle 31, the column 32, the cutting process section 33, the additive manufacturing section 34, the holding block 41, and the processing system 10. The driving mechanism 40 transmits power to these other mechanical devices and causes them to operate. The driving mechanism 40 is also connected to various kinds of sensors attached these mechanical devices and the temperature measuring device 45, and is capable of transmitting electrical signals indicating data of measurement results, etc. through the second input-output interface 16 to the processor 14. That is, the control section 11 is capable of controlling the operations of these other mechanical devices, which are configured to perform an operation by being respectively included in the saddle 31, the column 32, the cutting process section 33, the additive manufacturing section 34, the holding block 41, and the processing system 10, by transmitting the control signal through the second input-output interface 16 to the driving mechanism 40.

With these configurations, the control section 11 causes the processor 14 to execute the processing program 12 stored in the memory 13, thereby causing the processing system 10 to operate so as to become an additive manufacturing method described later.

An additive manufacturing method in the present embodiment will be described below. The processing system 10 is usable for the additive manufacturing method.

In general, preheating is necessary in an additive manufacturing in which metal is melted and added to a mother material. After melted metal is added at high temperatures, thermal stress occurs due to cooling caused by, for example, heat dissipation to outside air, and the melted metal is susceptible to cracking. Therefore, before adding the melted metal, the surface of the mother material in an additive manufacturing region to which the melted metal is added is heated to a preheating lower limit temperature or above set from a temperature range in which no cracking occurs. After that, the additive manufacturing is started in a preheated state before being lowered to a temperature below the preheating lower limit temperature. Thus, the occurrence of thermal stress is reduced to prevent the occurrence of cracking. In this case, a workpiece is generally preheated by an external heating device, etc. to keep the preheating lower limit temperature or above, and then the additive manufacturing is carried out. However, the use of the external heating device may increase processing time because it is necessary to transport the workpiece. Incorporating the heading device into the interior may lead to a complicated system configuration.

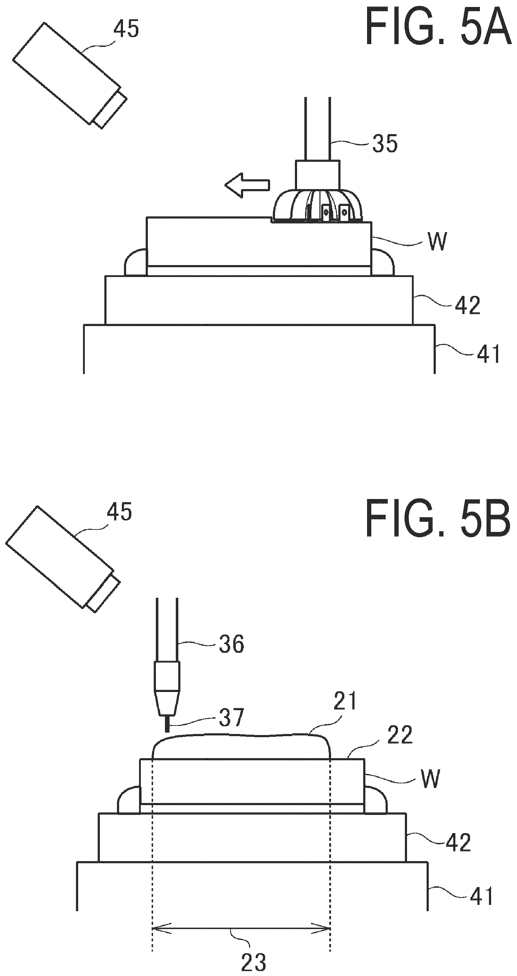

Therefore, as illustrated in FIG. 5A, the surface of the workpiece W that is a mother material is subjected to a cutting process before adding the melted metal, thereby preheating the workpiece W with cutting heat in the present embodiment. Specifically, the workpiece W as a mother material is firstly attached to the holding block 41 with a jig 42 interposed therebetween in the processing system 10. Subsequently, a target cutting region of the workpiece W by the cutting process section 33 as a preheating step is cut, and cutting heat thereof heats an additive manufacturing region that is a target additive manufacturing region in the workpiece W, thereby carrying out preheating. That is, the cutting process is carried out as the preheating step.

Here, when the additive manufacturing is started after the cutting process, the cutting process is carried out so that a surface temperature of the additive manufacturing region of the workpiece W can reach the preheating lower limit temperature or above. Therefore, it is preferable to employ a dry cutting carried out without supplying a coolant to the workpiece W during the cutting process in the preheating step. When carrying out the dry cutting, it is preferable to use as the cutting tool 35 a tool made of a material excellent in mechanical strength at high temperatures, such as ceramics tool and CBN (Cubic Boron Nitride) tool. The term "dry cutting" as used herein generally implies the case using no cutting fluid, but the present embodiment excludes a dry cutting using one which cools the additive manufacturing region of the workpiece W, for example, using gas as a coolant. That is, the dry cutting in the present embodiment means the dry cutting using neither a liquid coolant, such as the cutting fluid, nor other coolant.

Then, as illustrated in FIG. 5B, the preheating by the cutting process is followed by adding the melted metal by the additive manufacturing section 34. Specifically, a bead 21 is formed by melting a metal wire 37 by arc discharge while moving the metal wire 37 extending from the torch 36 of the additive manufacturing section 34 along the surface of the workpiece W. An additive manufacturing is carried out in the additive manufacturing region by forming the bead 21. Here, the additive manufacturing is started in a preheated state before lowering to the preheating lower limit temperature or below as described above. An example where the cutting region 22 is the whole of the upper surface of the workpiece W, and the additive manufacturing region 23 is a range smaller than the cutting region 22 is illustrated in the drawing. A metal laminate object is obtainable by repeating the additive manufacturing, for example, by laminating the bead.

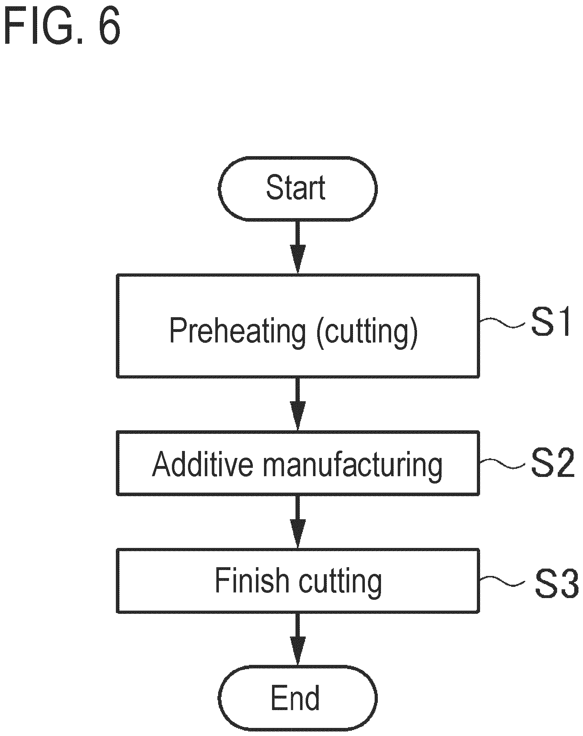

That is, as illustrated in FIG. 6, the additive manufacturing method in the present embodiment includes a preheating step (S1) of preheating the additive manufacturing region 23 by heating the cutting region 22 while subjecting the cutting region 22 to the cutting process. The preheating step (S1) is intended to carry out the preheating for an additive manufacturing step (S2) of adding melted metal. Hence, when starting the additive manufacturing step (S2), it is configured to maintain a state where a temperature of a machined surface of the workpiece is preheated to the preheating lower limit temperature or above. For example, taking into consideration time until it is possible to start the additive manufacturing after the cutting, it is preferable to keep a sufficiently high temperature relative to the preheating lower limit temperature in the preheating step.

The occurrence of cracking is prevented by adding the melted metal in the above preheated state in the additive manufacturing step (S2). That is, the additive manufacturing step (S2) is configured to start adding the melted metal before lowering to the preheating lower limit temperature or below. The additive manufacturing may be carried out a plurality of times as needed so as to laminate a plurality of beads 21.

After the additive manufacturing, a finishing process is carried out as needed in a finish cutting step (S3). The finishing process needs no preheating, and cutting conditions are determined from the viewpoint of finishing accuracy, such as dimensional accuracy and surface roughness, and from the view point of manufacturing efficiency.

As described above, the processing program 12 in the present embodiment causes the processing system 10 to operate so as to become the above processing method. That is, the processing program 12 includes at least a preheating routine and an additive manufacturing routine which respectively correspond to the preheating step (S1) and the additive manufacturing step (S2) described above.

As described above, the workpiece W is preheated by being heated with the cutting heat caused during the cutting process by adjusting the cutting conditions, for example, by carrying out the dry cutting using no coolant in the present embodiment. Incidentally, the preheating temperature is adjustable by adjusting the cutting conditions. For example, cutting heat can be increased to raise the preheating temperature by decreasing a depth of cut and by increasing a feed rate. Furthermore, a cutting path in the cutting process is set to a spiral path that permits continuous cutting, instead of one direction path intended for intermittent cutting. Consequently, the occurrence of the cutting heat can be continued to increase the cutting heat per time, thereby raising a preheating temperature. Alternatively, a total amount of cutting heat can be increased to raise a preheating temperature by increasing an amount of cutting (a total of depth of cut in a plurality of cutting operations). In the case of decreasing the preheating temperature, heat dissipation may be induced in a standby state, or the cutting conditions may be adjusted by, for example, decreasing the feed rate in contradiction to the above. Examples of the cutting conditions include depth of cut, cutting speed (rotational frequency of the cutting tool 35), feed rate, cutting path, and amount of cutting.

A temperature necessary for preheating in the additive manufacturing is determined by a material used for the additive manufacturing, such as a metal wire for forming the bead. The preheating lower limit temperature of most materials is preferably determined in a range of 100-300°C. For example, in the case of SUS630, a low-temperature cracking is more likely to occur if a temperature at which bead formation is started is below 100°C, and burn through is more likely to occur if setting to over 300°C. Therefore, the preheating lower limit temperature for SUS630 is preferably determined in the range of 100-300°C. For example, in the case of SKD61, cracking and peeling are more likely to occur below 150°C. Therefore, the above-mentioned predetermined temperature for SKD61 is determined in a range of 150°C or above.

As described above, with the present embodiment, the preheating to the preheating lower limit temperature or above by the cutting process is carried out prior to the additive manufacturing step of adding the melted metal, and a cooling rate of the melted metal added to the mother material can be decreased to prevent the curing and embrittlement of the heat-affected zone. Thus with the processing system 10, the preheating of the workpiece W is attainable while eliminating the need for an external heating device, which involves time-consuming transportation, and for a built-in heating device, which complicates the system. It is therefore possible to reduce processing time without complicating the configuration of the processing system 10.

Although the metal wire is melted to form the bead by arc discharge in the additive manufacturing step in the present embodiment, other methods may be employed as long as there is a laminate step including preheating. For example, a method where metal powder is melted and added by arc discharge may be employed.

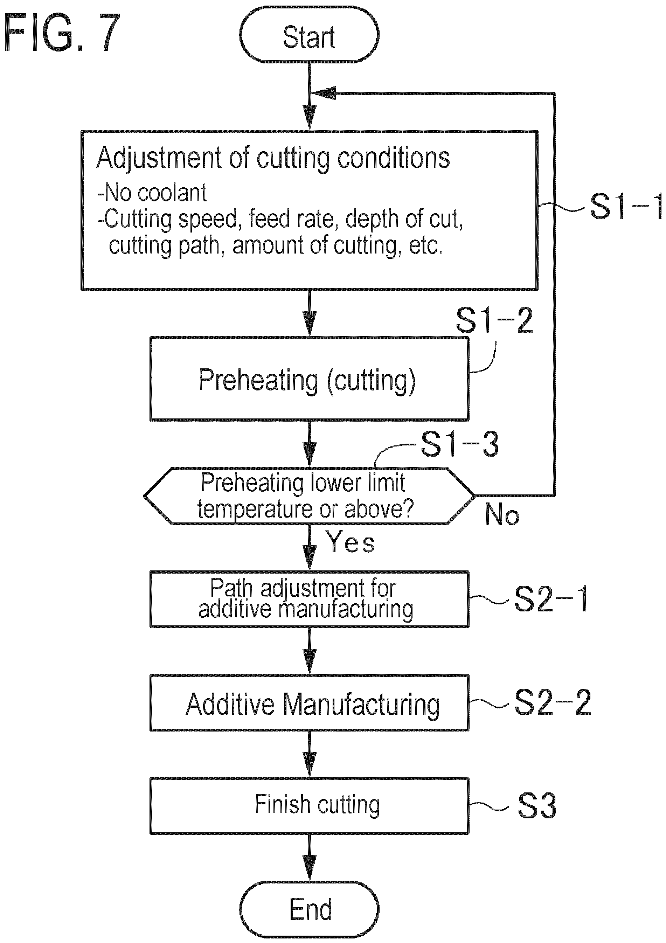

As illustrated in FIG. 7, the cutting conditions may be automatically adjusted according to temperatures measured before and after the preheating step. For example, before a preheating step (S1-2), a temperature measurement of a predetermined portion is made by the temperature measuring device 45, and the cutting conditions is adjustable (S1-1) on the basis of a result of the temperature measurement. On the premise of using no coolant (setting to OFF) as described above, cutting speed, feed rate, depth of cut, cutting path, and amount of cutting are adjustable as the cutting conditions. For example, if it is a relatively high temperature, the preheating can be carried out while avoiding a burden imposed on a tool by decreasing the cutting speed and feed rate. If it is a low temperature, the cutting conditions are adjusted to reach a higher temperature. A determination as to whether it reaches the preheating lower limit temperature or above may be made (S1-3) by measuring a temperature when terminating the preheating step (S1-2). If it does not reach the preheating lower limit temperature or above (S1-3: NO), the cutting conditions are adjusted again (S1-1), and preheating by the cutting process is further added (S1-2) so as to keep the preheating temperature. In this case, the cutting conditions need to be adjusted so as to increase at least the amount of cutting. If it reaches the preheating lower limit temperature or above (S1 -3: Yes), the additive manufacturing is carried out in the additive manufacturing step. The processing program 12 may include an automatic cutting condition adjusting routine where the cutting conditions are adjusted on the basis of the above-mentioned temperature measurement result.

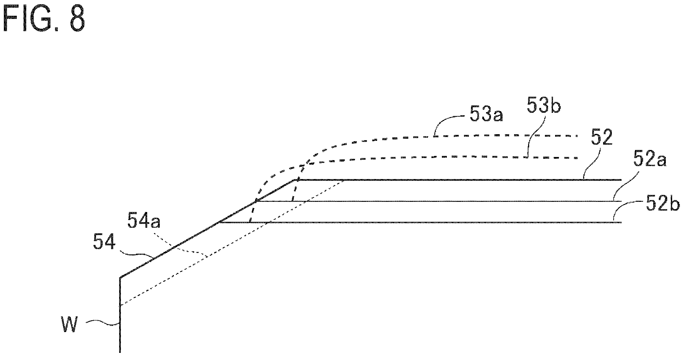

Referring here also to FIG. 8, the position of the path including a start potion of addition of the melted metal in the additive manufacturing step is preferably determined on the basis of a shape of the workpiece W after being cut by the cutting process in the preheating step. For example, a lateral surface of the workpiece W includes an inclined surface 54 extending downward and outward in Fig. 8, and a part of the inclined surface 54 is to be cut when cutting the upper surface 52 in the preheating step. Taking into consideration cases where it may be necessary to adjust the amount of cutting, an upper surface 52b after being cut is assumed whose amount of cutting is adjusted to be larger than that of the upper surface 52a after being cut. In this case, the addition of the melted metal is carried out so as to maintain the inclined surface 54a after being finished. If it results in the upper surface 52a after the preheating, a bead 53a is to be formed. In contrast, if it results in the upper surface 52b, a bead 53b is to be formed over a wider range and at a deeper position relative to the upper surface 52 before being cut. Thus, the start position for addition of the melted metal and the position of path are preferably adjusted according to a three-dimensional shape of the workpiece W and the shape of the workpiece W after being cut in the preheating step which is obtained by the amount of cutting in the preheating step.

Therefore, it is preferable to carry out an additive manufacturing (S2-2) for adding the melted metal after making a path adjustment for the additive manufacturing (S2-1) in the additive manufacturing step. That is, in this case, the processing program 12 may include an automatic position adjustment routine for additive manufacturing where it is configured to adjust the position of the path including the start position in the additive manufacturing. Finally, a finish cutting (S3) is carried out as needed.

### [Preheating Test]

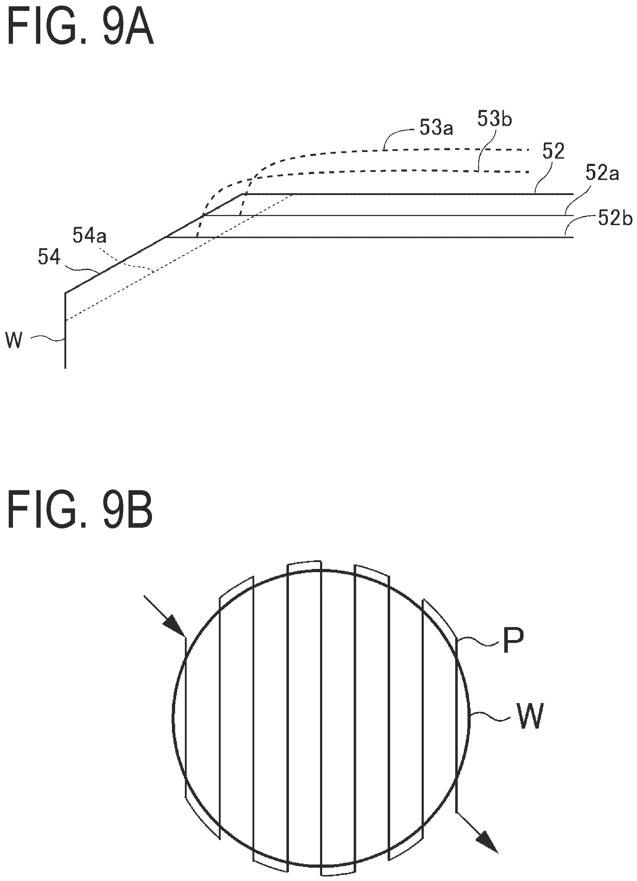

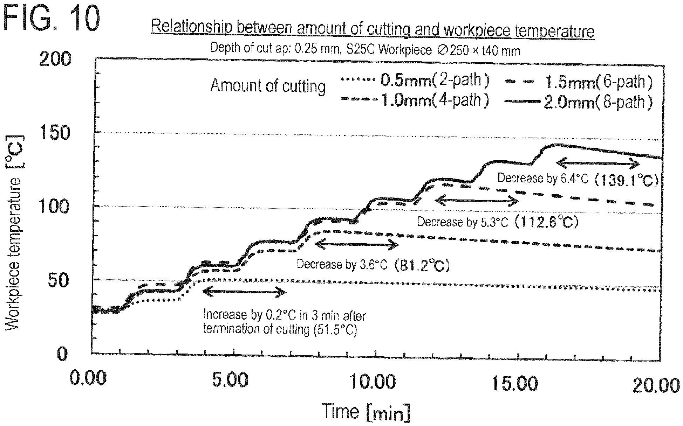

Results of a preheating test of a workpiece W by a cutting process are described with reference to FIGs. 9 and 10.

As illustrated in FIG. 9A, a temperature of a tabular workpiece W when a surface of the workpiece W was subjected to a dry cutting was checked. Specifically, the disk-shaped workpiece W that was composed of S25C steel and has dimensions of φ 250 mm × t 40 mm was prepared and was held on the holding block 41 with the jig 42 interposed therebetween while keeping a main surface thereof approximately horizontally. A thermocouple 51 is attached to the workpiece W so as to bring a hot junction into contact with a bottom surface of the workpiece W. The whole upper surface of the workpiece W was subjected to dry cutting by a depth of cut of 0.25 mm, and a temperature measured by the thermocouple 51 was recorded as the temperature of the workpiece W.

As illustrated in FIG. 9B, a cutting path P was a path that proceeds while turning back alternately a plurality of parallel straight lines from one end portion of the workpiece W to an end portion on an opposite side. A turnback part between the straight lines of the cutting path P was a path along a circumference of the upper surface of the workpiece W. A machining allowance in a radial direction was 30 mm. A temperature of the workpiece W was measured after a plurality of cutting operations along the above cutting path P.

As illustrated in FIG. 10, in the case where the amount of cutting was 0.5 mm by performing twice the cutting process (as a 2-path) of the workpiece W at room temperature along the cutting path P at a depth of cut of 0.25 mm, the temperature was increased to 51.3°C upon completion of the cutting process, and thereafter the temperature was increased by 0.2°C in three minutes and reached 51.5°C. Because it was relatively a low temperature, it can be considered that a temperature rise by thermal conduction from a cut surface was larger than a temperature decrease due to heat release after the completion of the cutting process. With 4-path, the temperature 84.8°C upon completion of the cutting process was decreased by 3.6°C in three minutes. Similarly, with 6-path, the temperature 117.8°C was decreased by 3.5°C. With 8-path, the temperature 145.5°C was decreased by 6.4°C.

This showed that the preheating to approximately 140°C was definitely possible in at least the workpiece W used in the present preheating test.

In an actual processing method, conditions of a combination of the cutting process and the additive manufacturing may be previously determined according to data obtained by conducting the above preheating test, and manufacturing steps according to the combination may be employed. A temperature drop rate differs depending on a heat capacity of the workpiece W, a contact state with a jig described later, and a temperature difference with the circumference. Therefore, the conditions of the combination of the cutting process and the additive manufacturing are preferably determined taking these into consideration.

As illustrated in FIG. 9A, the jig 42 is also preferably a claw-shaped jig. That is, the jig 42 is configured so that a claw-shaped chuck part 42a can hold the workpiece W. Consequently, it is configured to come into contact with the workpiece W in a relatively small area when holding the workpiece W. This reduces heat removal from the jig 42, and thermal conduction through the holding block 41 to the processing system 10 can be reduced as much as possible to maintain the temperature of the workpiece W higher, thereby efficiently carrying out the preheating. The chuck part 42a is preferably made of a material whose thermal conductivity is relatively small. Additionally, if a holding state by the claw-shaped jig is maintained throughout the preheating step and the additive manufacturing step, the heat removal from the workpiece W can be suitably reduced not only in the preheating step but also until start of the additive manufacturing.

Although the representative embodiments and modifications thereof in the present invention have been described above, the present invention is not necessarily limited thereto, but these are changeable by a person skilled in the art. That is, the person skilled in the art will find out various alternative embodiments and modifications without departing from the scope of accompanying claims.

### Reference Signs List

10 ... Processing system, 11 ... Control section, 21 ... Bead, 33 ... Cutting process section, 34 ... Additive manufacturing section, 35 ... Cutting tool, 36 ... Torch, 45 ... Temperature measuring device, S1 ... Preheating step, W ... Workpiece

## Claims

1. An additive manufacturing method comprising:
a preheating step of heating so that a temperature of an additive manufacturing region in a workpiece reaches a preheating lower limit temperature or above by cutting a cutting region in the workpiece including the additive manufacturing region; and
an additive manufacturing step of adding melted metal to the additive manufacturing region in the workpiece preheated by the preheating step.

2. The additive manufacturing method according to claim 1, further comprising measuring a temperature of the additive manufacturing region after cutting the workpiece in the preheating step, and heating the additive manufacturing region by further cutting the cutting region if the temperature is lower than the preheating lower limit temperature.

3. The additive manufacturing method according to claim 1 or 2, further comprising determining a start position for addition of the melted metal to the workpiece in the additive manufacturing step, according to a shape of the workpiece after cutting in the preheating step.

4. The additive manufacturing method according to any one of claims 1 to 3,
wherein the cutting in the preheating step is carried out without supplying a coolant to the workpiece.

5. The additive manufacturing method according to any one of claims 1 to 4,
wherein the cutting in the preheating step is carried out using a ceramics tool or CBN tool as a cutting tool.

6. The additive manufacturing method according to any one of claims 1 to 5,
wherein the workpiece is held by a claw-shaped jig, and a holding state is maintained during the preheating step and the additive manufacturing step.

7. The additive manufacturing method according to any one of claims 1 to 6,
wherein the additive manufacturing step comprises laminating a bead while moving and melting a metal wire by arc discharge.

8. An additive manufacturing system comprising:
an additive manufacturing section to add melted metal to a workpiece;
a cutting process section to subject a surface of the workpiece to a cutting process; and
a control section to transmit a control signal that controls an operation of each of these sections,
wherein the control section causes the cutting process section to cut a cutting region including an additive manufacturing region in the workpiece so as to raise a temperature of the additive manufacturing region to a preheating lower limit temperature or above, and
wherein the control section causes the additive manufacturing section to add the melted metal to the additive manufacturing region in the workpiece in a preheated state.

9. The additive manufacturing system according to claim 8, further comprising a temperature measuring device to measure a surface temperature of the workpiece,
wherein the control section causes the cutting process section to further cut the cutting region so as to heat the additive manufacturing region if the temperature is lower than the preheating lower limit temperature on a basis of a measurement result in the temperature measuring device in terms of a temperature of the additive manufacturing region after cutting the workpiece.

10. The additive manufacturing system according to claim 8 or 9, wherein the control section determines a start position for addition of the melted metal to the workpiece, on a basis of a shape of the workpiece after being cut by the cutting process section, and the control section causes the additive manufacturing section to add the melted metal.

11. The additive manufacturing system according to any one of claims 8 to 10,
wherein the control section causes the cutting process section to cut the cutting region without supplying a coolant.

12. The additive manufacturing system according to any one of claims 8 to 11,
wherein the control section causes the cutting process section to cut the cutting region by using a ceramic tool or CBN tool as a cutting tool.

13. The additive manufacturing system according to any one of claims 8 to 12, further comprising a claw-shaped jig to hold the workpiece.

14. The additive manufacturing system according to any one of claims 8 to 13,
wherein the additive manufacturing section laminates a bead while moving and melting a metal wire by arc discharge.

15. An additive manufacturing program comprising:
a preheating routine where a cutting region including an additive manufacturing region in a workpiece is cut by a cutting process section so as to raise a temperature of the additive manufacturing region to a preheating lower limit temperature or above; and
an additive manufacturing routine where melted metal is added to the additive manufacturing region of the workpiece in a preheated state by an additive manufacturing section.
